# EUROPÄISCHE PATENTSCHRIFT

(11) **EP 4 090 202 B1**
(45) Veröffentlichungstag und Bekanntmachung des Hinweises auf die Patenterteilung: **20.09.2023**
(21) Anmeldenummer: 20829827.3
(22) Anmeldetag: 11.12.2020
(51) Int. Cl.: A47J 31/06, A47J 31/057, A47J 31/44

(54) **MASCHINE UND VERFAHREN ZUR ZUBEREITUNG EINES HEISSGETRÄNKES**
MACHINE AND METHOD FOR PREPARING A HOT BEVERAGE
MACHINE ET PROCÉDÉ DE PRÉPARATION D'UNE BOISSON CHAUDE

(30) Priorität: 17.01.2020 DE 102020101086
(43) Veröffentlichungstag der Anmeldung: 23.11.2022
(73) Patentinhaber: Melitta Single Portions GmbH & Co. KG, 32425 Minden (DE)
(72) Erfinder: PAHNKE, Jan, 32427 Minden (DE); FELDMANN, Holger, 47877 Willich (DE); FERNANDES DE CARVALHO, Kerstin, 33604 Bielefeld (DE)
(74) Vertreter: Kleine, Hubertus
(86) Internationale Anmeldenummer: PCT/EP2020/085781
(87) Internationale Veröffentlichungsnummer: WO 2021/144089

(56) Entgegenhaltungen:
- DE-A1- 19 920 581
- DE-U1- 7 735 174
- DE-U1- 20 119 704
- US-A1- 2015 093 483

## Beschreibung

Die vorliegende Erfindung betrifft eine Maschine zur Zubereitung eines Heißgetränkes, mit einer Einrichtung zum Erzeugen und zum Fördern von heißem Wasser, einer Haltevorrichtung, in die ein Filterhalter lösbar einsetzbar ist, einem Zulauf für das heiße Wasser, der einen oberhalb des Filterhalters angeordneten Auslass aufweist, um das heiße Wasser von oben auf den Filterhalter in eine nach oben offene Aufnahme mit einem Extraktionsmaterial auszugeben, und einer Antriebseinrichtung, um den Zulauf für das heiße Wasser relativ zu dem Filterhalter zu bewegen, und ein Verfahren zur Zubereitung eines Heißgetränkes.

Die EP 2 700 337 B1 offenbart eine Kaffeemaschine, bei der Wasser von einem Wassertank über eine Heizeinrichtung und eine Pumpe zu einem Zulauf förderbar ist, um das heiße Wasser in einen Filterhalter mit einem Filterpapiereinsatz mit Kaffeemehl einzufüllen. Aus dem Filterhalter wird dann der gebrühte Kaffee in ein Gefäß ausgegeben. Solche Kaffeemaschinen haben sich an sich bewährt, allerdings wird immer die vollständige Menge an erhitztem Wasser über den Zulauf ausgegeben. Zu Beginn des Brühvorganges wird zunächst das hinter der Heizeinrichtung befindliche, kalte Wasser ausgegeben. Die dann folgende Menge des in der Heizeinrichtung erhitzten Wassers wird zu Beginn stark abgekühlt, da sie Energie an die noch kalte Leitung im Zulauf abgibt, so dass über den Zulauf eine erste Menge an Wasser mit niedriger Temperatur ausgegeben wird, bis sich der Zulauf über das erhitzte Wasser entsprechend erwärmt hat. Dies wirkt sich zumindest beim Brühen kleiner Mengen von Kaffee nachteilig aus.

In der DE 199 20 581 A1 ist eine Heißgetränkebrühvorrichtung offenbart, bei der vor eine Einleitung eine Umschalteinrichtung angeordnet ist, die über eine Steuereinrichtung schaltbar ist, damit das Wasser erst ab einer bestimmten Temperatur in die Einleitung geleitet wird.

US 2015 / 0093483 A1 offenbart eine Vorrichtung zur Zubereitung eines Heißgetränkes mit den Merkmalen des Oberbegriffes des Anspruches 1.

Es ist daher Aufgabe der vorliegenden Erfindung, eine Vorrichtung und ein Verfahren zur Zubereitung eines Heißgetränkes zu schaffen, die ein verbessertes Brühen des Extraktionsmaterials ermöglichen.

Diese Aufgabe wird mit einer Vorrichtung mit den Merkmalen des Anspruches 1 sowie einem Verfahren mit den Merkmalen des Anspruches 11 gelöst.

Bei der erfindungsgemäßen Maschine ist ein Zulauf für erhitztes Wasser oberhalb eines Filterhalters mit einem Auslass angeordnet, wobei über den Auslass heißes Wasser in eine nach oben offene Aufnahme mit einem Extraktionsmaterial ausgegeben werden kann, wobei eine Antriebseinrichtung vorgesehen ist, um den Zulauf für das heiße Wasser relativ zu dem Filterhalter zu bewegen, und der Filterhalter eine Kammer für Wasser aufweist, die über eine Öffnung befüllbar ist, und der Zulauf relativ zu dem Filterhalter zwischen einer Position im Wesentlichen vertikal über der Öffnung und einer weiteren Position im Wesentlichen vertikal über der Aufnahme mit dem Extraktionsmaterial bewegbar ist. Dadurch kann der Zulauf in einem ersten Schritt über der Öffnung angeordnet werden, um eine erste Menge an Wasser in die Kammer zum Sammeln von Wasser einzufüllen, so dass diese erste Menge an Wasser genutzt wird, um die Leitung des Zulaufes zu erwärmen ohne bereits Kontakt zum Extraktionsmaterial zu haben. In einem zweiten Schritt wird dann der Zulauf mit dem Auslass über die Aufnahme mit dem Extraktionsmaterial positioniert, um dann auch schon zu Beginn des Brühvorganges heißes Wasser auf das Extraktionsmaterial ausgeben zu können. Dadurch wird das anfängliche Aufgeben von zunächst komplett unbeheiztem Wasser und danach eher kühlerem Wasser durch die Abkühlung durch die Energieabgabe an die Leitung in der Zuleitung vermieden. Die Anordnung des Zulaufes vertikal über der Öffnung oder der Aufnahme kann, muss aber nicht exakt sein, beispielsweise kann der austretende Strahl an kaltem oder heißem Wasser auch eine horizontale Bewegungskomponente aufweisen, so dass eine horizontal leicht versetzte Anordnung des Zulaufes zur Kompensierung des zur Vertikalen leicht geneigten Strahls noch als im Wesentlichen vertikal über der Aufnahme oder der Öffnung angesehen wird.

Vorzugsweise weist die Kammer zum Sammeln von Wasser in dem Filterhalter ein Volumen zwischen 10 ml bis 400 ml, insbesondere 20 ml bis 80 ml, auf. Dadurch kann eine ausreichende Menge an Wasser vor Beginn des eigentlichen Brühvorganges in die Kammer eingeleitet werden, um dann nach Erhitzen der Leitung des Zulaufes das erhitzte Wasser an der Aufnahme mit dem Extraktionsmaterial abzugeben.

Vorzugsweise ist der Filterhalter mehrteilig ausgebildet und umfasst ein erstes Teil für die Aufnahme von Extraktionsmaterial, insbesondere unter Zwischenschaltung eines Filterpapiereinsatzes, und ein zweites Teil, das das erste Teil zumindest bereichsweise umgibt. Dabei ist zwischen dem ersten Teil und dem zweiten Teil eine Kammer zum Sammeln von Wasser ausgebildet, die dann durch Entnahme des Filterhalters und Verschwenken desselben wieder entleert werden kann. In einer besonders vorteilhaften Gestaltung ist an dem Filterhalter zusätzlich zu einer ersten Öffnung noch mindestens eine weitere Öffnung angeordnet, die bezogen auf die Aufnahme gegenüberliegend angeordnet ist, so dass die Aufnahme zwischen der ersten Öffnung und einer zweiten Öffnung angeordnet ist, die beide mit der Kammer zum Sammeln von Wasser verbunden sind. Dadurch kann der Filterhalter auch mit nur einem Griffabschnitt gleichermaßen durch Links- und Rechtshänder benutzt werden, da der Filterhalter auch um 180° um die Hochachse gedreht in die Halterung eingesetzt werden kann. Je nach Orientierung dient dann die eine oder die andere Öffnung zur Aufnahme der ersten Wassermenge. Zusätzlich vereinfacht die zusätzliche Öffnung ein definiertes Ausgießen der aufgefangenen Wassermenge, da beim Ausgießen durch die eine Öffnung Luft durch die jeweils andere Öffnung nachströmen kann. Es ist auch denkbar noch weitere Öffnungen am Filterhalter anzubringen.

Das erste Teil und das zweite Teil des Filterhalters können im Wesentlichen schalenförmig ineinander gesteckt sein. Dabei kann zwischen dem ersten Teil und dem zweiten Teil eine ringförmige Kammer ausgebildet sein, die in einem Verbindungsbereich zwischen dem ersten Teil und dem zweiten Teil durch mindestens ein Dichtelement abgedichtet ist. Der Filterhalter ist mit dem ersten Teil und dem zweiten Teil vorzugsweise als Einheit bewegbar, wobei das zweite Teil und das erste Teil über Befestigungsmittel aneinander fixiert sind. Als Befestigungsmittel können Schrauben, Klemmmittel, Rastmittel, ein Gewinde oder ein Bajonettverschluss sowie andere Befestigungsmittel eingesetzt werden. Des weiteren können auch andere Verbindungstechniken wie Kleben oder Schweißen eingesetzt werden.

Um eine Verunreinigung durch Verspritzen von heißem Wasser zu vermeiden, ist an der Öffnung vorzugsweise eine zur Horizontalen geneigte Aufprallfläche vorgesehen, von der das aufgegebene heiße Wasser in die Kammer abläuft.

Die Neigung der Aufprallfläche zur Horizontalen kann beispielsweise in einem Winkelbereich zwischen 10° und 60°, insbesondere 30° bis 55°, liegen. Dadurch kann über den Auslass Wasser über die Schwerkraft nach unten ausströmen und wird dann im Wesentlichen vollständig in die Kammer eingeleitet. Dabei wird auch ein Spritzen beim Auftreffen weitestgehend verhindert und so das Risiko des Verbrühens minimiert.

Für eine einfache Handhabung beim Brühen des Heißgetränkes kann an der Aufnahme an der Unterseite ein Ventil zum Öffnen und Schließen einer Auslassöffnung vorgesehen sein. das Ventil kann wahlweise mechanisch geöffnet werden, beispielsweise durch Abstellen einer Kanne unterhalb des Filterhalters, durch Einsetzen in einen Halter und Interaktion mit einer Betätigungsgeometrie oder durch eine Steuerung, mittels der das Ventil ansteuerbar ist. Der Filterhalter ist vorzugsweise stationär an der Maschine angeordnet, während der Zulauf über einen Antrieb bewegt wird. Optional können natürlich Zulauf und Filterhalter oder nur der Filterhalter bewegt werden, um eine Relativbewegung zwischen Filterhalter und Zulauf zu bewirken.

In einer weiteren Ausgestaltung ist an dem Zulauf oder der Haltevorrichtung ein Sensor vorgesehen, mittels dem erfassbar ist, ob der Filterhalter an der Haltevorrichtung angeordnet ist. Dann kann mittels des Sensors eine Steuerung aktiviert werden, die eine Ausgabe von heißem Wasser verhindert, sollte der Filterhalter nicht oder nicht richtig in die Haltevorrichtung eingesetzt sein. Ein solcher Sensor kann als Kontaktsensor, beispielsweise als elektrischer Sensor oder als optischer Sensor, ausgebildet sein. Mit einem optischen Sensor kann zudem erfasst werden, ob ein Extraktionsmaterial in dem Filterhalter angeordnet ist. Für eine besserte Überwachung des Brühvorganges kann zudem ein Leuchtmittel an dem Zulauf vorgesehen sein, das nach unten abstrahlt.

Bei dem erfindungsgemäßen Verfahren wird zunächst eine erste Menge an Wasser an dem Zulauf in eine Öffnung an dem Filterhalter ausgegeben, damit die erste Menge an Wasser in eine Kammer zum Sammeln des Wassers an dem Filterhalter eingeleitet wird. Dabei handelt es sich zuerst um kaltes Wasser, das sich unter Umständen hinter dem Heizer im System befinden kann und danach das in der Heizeinrichtung erhitzte Wasser das zu Beginn durch die Durchleitung in dem Zulauf bereits etwas abgekühlt ist. Nach dem Einleiten des Wassers in die Kammer wird der Zulauf relativ zu dem Filterhalter von einer Position oberhalb der Öffnung zu einer Position oberhalb einer nach oben offenen Aufnahme mit Extraktionsmaterial bewegt, wobei wahlweise der Filterhalter, der Zulauf oder der Filterhalter und der Zulauf bewegt werden. Anschließend wird eine zweite Menge an heißem Wasser auf das Extraktionsmaterial zum Brühen des Heißgetränkes abgegeben. Diese Verfahrensweise ermöglicht ein vollständiges Entfernen von eventuellem Totwasser, ein und ein Spülen, was unter hygienischen Gesichtspunkten vorteilhaft ist. Das Vorwärmen der Zuleitung wirkt sich, besonders bei kleinen Getränkemengen, vorteilhaft auf die Extraktion aus.

Vorzugsweise beträgt die erste Menge an heißem Wasser, das in die Kammer eingeleitet wird, zwischen 1 ml bis 80 ml, insbesondere zwischen 5 ml und 30 ml. Dadurch kann über die erste Menge der Zulauf in einem gewissen Maß erhitzt und gespült werden. Für das Verfahren kann der Filterhalter stillstehend angeordnet sein, wenn der Zulauf über eine Antriebseinrichtung bewegt wird.

Die Erfindung wird nachfolgend anhand eines Ausführungsbeispiels mit Bezug auf die beigefügten Zeichnungen näher erläutert. Es zeigen:

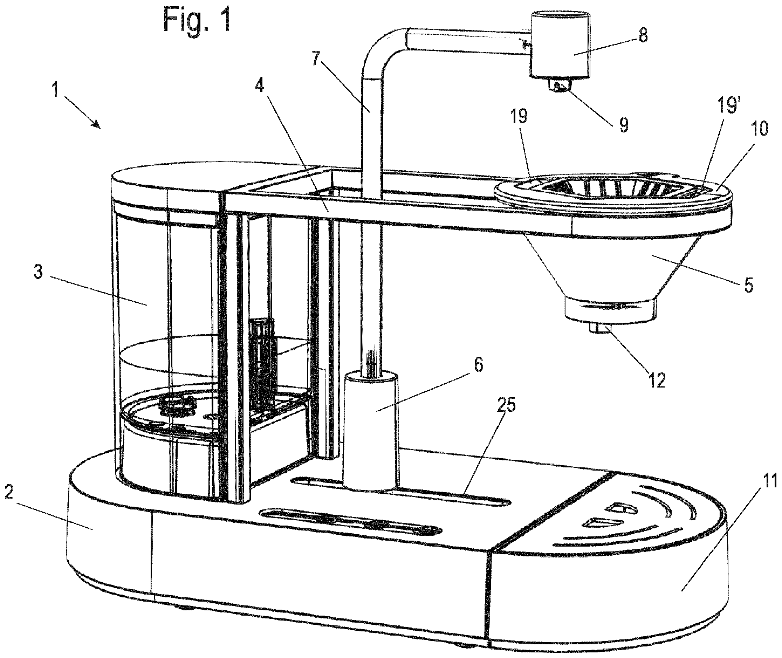

- Figur 1: eine Ansicht einer erfindungsgemäßen Maschine zur Zubereitung eines Heißgetränkes, und
- Figur 2: eine Schnittansicht durch den Filterhalter der Maschine der Figur 1.

Eine Maschine 1 zur Zubereitung eines Heißgetränkes umfasst eine Basisstation 2, die ein Gehäuse aufweist, in dem eine Heizeinrichtung, eine Pumpe und eine Steuerung angeordnet sind. An der Basisstation 2 ist ein abnehmbarer Tank 3 für Frischwasser vorgesehen, über den Wasser zu der Pumpe, der Heizeinrichtung und zu einem Zulauf 7 förderbar ist. Der Zulauf 7 ist als Rohrleitung ausgebildet, die von der Basisstation 2 nach oben hervorsteht. Dabei ist der Zulauf 7 nicht stationär an dem Gehäuse der Basisstation 2 angeordnet, sondern über eine Antriebseinrichtung bewegbar. Hierfür ist ein Schlitten 6 vorgesehen, der durch die Antriebseinrichtung entlang einer Führung unterhalb einer Gehäuseöffnung 25 an der Basisstation 2 linear bewegbar ist. Zudem kann der Schlitten 6 über einen weiteren Antrieb gedreht werden, so dass der Zulauf 7 um eine vertikale Achse drehbar ist. Es können auch andere Antriebe zum Bewegen des Zulaufes 7 eingesetzt werden.

Der Zulauf 7 weist einen vertikalen Abschnitt und einen horizontalen Abschnitt auf, wobei der Zulauf 7 an einem Auslass 9 mündet, der oberhalb eines Filterhalters 10 angeordnet ist. An dem Zulauf 7 ist oberhalb des Auslasses 9 ferner ein Halter 8 vorgesehen, an dem beispielsweise ein Leuchtmittel, insbesondere LED-Leuchtmittel, vorgesehen ist, das über eine Steuerung in der Basisstation 2 ansteuerbar ist. Zudem kann an dem Halter 8 ein optischer Sensor vorgesehen sein, der erfasst, ob ein Filterhalter 10 an einer Haltevorrichtung 4 der Maschine 1 eingesetzt ist oder nicht. Optional kann ein solcher Sensor auch feststellen, ob in dem Filterhalter 10 ein Filterpapiereinsatz und/oder ein Extraktionsmaterial angeordnet ist. Hierfür kann beispielsweise ein optischer Sensor mit entsprechender Farberkennung eingesetzt werden.

Die Maschine weist an der Basisstation 2 eine feststehende Haltevorrichtung 4 auf, an der eine schalenförmige Halterung 5 zum lösbaren Einsetzen des Filterhalters 10 vorgesehen ist. An der Unterseite der Halterung 5 ist ein Auslass 12 für das Brühgetränk vorgesehen, insbesondere für Kaffee oder Tee.

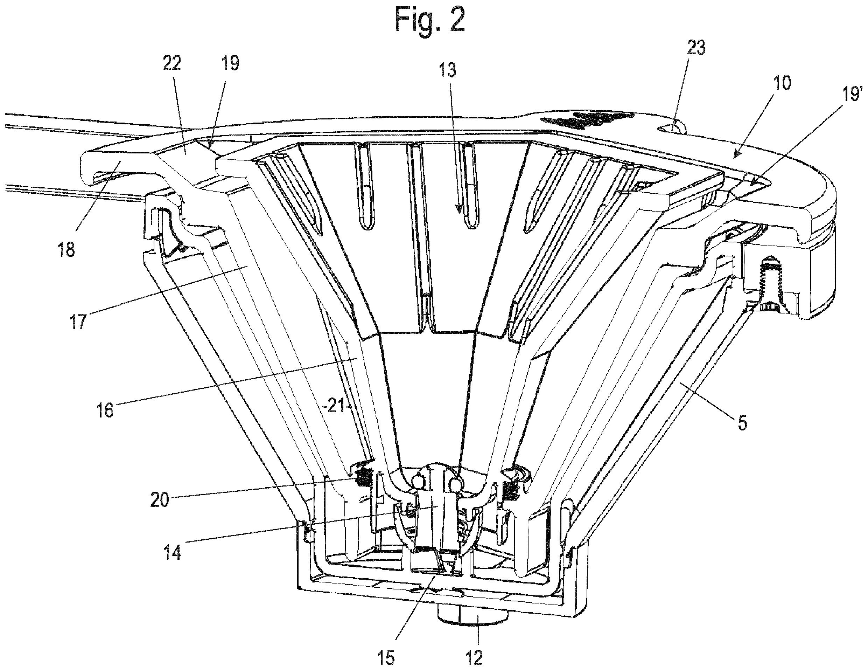

Der Filterhalter 10 ist in Figur 2 im Schnitt dargestellt.

Der Filterhalter 10 umfasst eine nach oben offene Aufnahme 13 an einem ersten Teil 16. In die Aufnahme 13 kann ein Filterpapiereinsatz oder ein anderer Filtereinsatz mit einem Extraktionsmaterial eingefügt werden. An der Unterseite der Aufnahme 13 ist an einem Boden ein Ventil 14 vorgesehen, mittels dem eine untere Auslassöffnung an dem Teil 16 geöffnet und geschlossen werden kann. Das Ventil 14 ist dabei in die geschlossene Position vorgespannt und kann wahlweise über mechanische Betätigungsmittel, beispielsweise ein Gefäß unterhalb des Filterhalters 10, das Einsetzen in den Halter 5 und Interaktion mit einer Betätigungsgeometrie 15 oder durch eine Steuerung geöffnet oder geschlossen werden. Bei geöffnetem Ventil 14 kann das gebrühte Getränk durch den Auslass 12 in ein Gefäß abgegeben werden.

Um das erste Teil 16 des Filterhalters 10 ist ein zweites Teil 17 angeordnet, das ebenfalls schalenförmig ausgebildet ist und in einem Abstand zu dem ersten Teil 16 angeordnet ist. Dadurch ist zwischen dem ersten Teil 16 und dem zweiten Teil 17 eine ringförmige oder hülsenförmige Kammer 21 zum Sammeln von Wasser ausgebildet. Das erste Teil 16 und das zweite Teil 17 sind in einem unteren Bereich über mindestens ein Dichtelement 20 dichtend aneinander angeordnet.

Der Filterhalter 10 ist in die ring- oder schalenförmige Halterung 5 der Maschine 1 lösbar eingesetzt und kann über einen hervorstehenden Griffabschnitt 23 auf einfache Weise nach oben entnommen werden.

An dem Filterhalter 10 ist eine nach oben weisende Öffnung 19 ausgebildet, in die eine erste Menge an Wasser einfüllbar ist. Unterhalb der Öffnung 19 ist eine Aufprallfläche 22 vorgesehen, die integral mit dem zweiten Teil 17 unterhalb eines horizontalen Randes 18 des Filterhalters 10 angeordnet ist. Die Aufprallfläche 22 ist zur Horizontalen geneigt, beispielsweise in einem Winkel zwischen 10° und 60°, insbesondere 30° bis 55°, um auftreffendes Wasser in die Kammer 21 abzuleiten, ohne dass der Rand 18, andere Bauteile oder im schlimmsten Fall der Nutzer mit heißem Wasser bespritzt werden.

Die ringförmige Kammer 21 zwischen dem ersten Teil 16 und dem zweiten Teil 17 weist vorzugsweise ein Volumen zwischen 10 ml bis 400 ml, insbesondere 20 ml bis 80 ml, auf.

Zum Brühen von Kaffee wird zunächst in den Filterhalter 10 ein Filterpapiereinsatz mit einem Extraktionsmaterial eingesetzt. Der Filterpapiereinsatz kann dabei wahlweise nach oben offen ausgestaltet sein oder geschlossen, um dann erst über das Aufbringen von heißem Wasser eine Öffnung zu bewirken, wie dies beispielsweise in der DE 10 2018 101 333 offenbart ist. Der Filterhalter 10 kann dann in die Haltevorrichtung 4 der Maschine 1 eingesetzt werden.

Optional kann dann über einen Sensor erfasst werden, ob der Filterhalter 10 mit Extraktionsmaterial oder einer Portionspackung befüllt ist. Hierfür kann ein Leuchtmittel an dem Halter 8 den Filterhalter 10 entsprechend beleuchten, um dann mit einem optischen Sensor eine Erfassung durchzuführen, die an eine Steuerung in der Basisstation 2 weitergeleitet wird.

Die Maschine 1 saugt nun Wasser aus dem Tank 3 an und fördert dies über eine Pumpe und eine Heizeinrichtung in den Zulauf 7, der in einer ersten Position mit dem Auslass 9 oberhalb der Öffnung 19 angeordnet ist. Dadurch wird eine erste Menge an Wasser in die Öffnung 19 und somit die Kammer 21 zum Sammeln von Wasser eingeleitet. Die erste Menge an Wasser kann beispielsweise zwischen 5 ml und 30 ml betragen und reicht aus, um den Zulauf 7 vorzuwärmen und zu spülen.

Nach dem Einleiten einer ersten Menge an Wasser in die Kammer 21 wird der Zulauf 7 relativ zu dem Filterhalter 10 bewegt, wobei in diesem Ausführungsbeispiel der Filterhalter 10 stationär angeordnet ist und der Zulauf 7 über einen oder mehrere Antriebe bewegt wird. Dann kann nun heißes Wasser aus dem Zulauf 7 entweder direkt auf das Extraktionsmaterial oder eine Verschlussvorrichtung an einer Portionspackung aufgegeben werden, um den Brühvorgang zu beginnen. Optional kann das heiße Wasser aus dem Zulauf 7 auch über das Extraktionsmaterial verteilt werden entsprechend vorgegebenen Mustern, so dass eine gleichmäßigere Extraktion möglich ist. Der Zulauf 7 kann somit auch während des Ausgebens einer zweiten Menge an heißem Wasser bewegt werden. Das Brühgetränk, insbesondere der Kaffee, wird nun an dem Auslass 12 in ein nicht dargestelltes Gefäß ausgegeben. Das Gefäß ist dabei auf dem Tassenblech einer Tropfschale 11 abgestellt. Dabei ist das Tassenblech mit Öffnungen versehen, so dass nach der Entnahme des Gefäßes Tropfen des Brühgetränkes in der Tropfschale 11 gesammelt werden können. Nach dem Brühen kann dann der Filterhalter 10 aus der Halterung 5 entnommen werden, um sowohl das gebrühte Extraktionsmaterial zu entsorgen als auch das gesammelte Wasser aus der Kammer 21 zu entleeren.

An dem Filterhalter 10 ist bezogen auf die Aufnahme 13 eine zweite Öffnung 19' gegenüberliegend zu der ersten Öffnung 19 angeordnet. Dadurch kann der Filterhalter 10 auch um 180° gedreht eingesetzt werden, um über die zweite Öffnung 19' Wasser in der Kammer 21 zu sammeln.

In dem dargestellten Ausführungsbeispiel ist die Kammer 21 ringförmig zwischen dem ersten Teil 16 und dem zweiten Teil 17 angeordnet. Es ist natürlich auch möglich, die Kammer 21 nur an einer Seite des Filterhalters vorzusehen, und nicht ringförmig zu gestalten.

### Bezugszeichenliste

- 1: Maschine
- 2: Basisstation
- 3: Tank
- 4: Haltevorrichtung
- 5: Halterung
- 6: Schlitten
- 7: Zulauf
- 8: Halter
- 9: Auslass
- 10: Filterhalter
- 11: Tropfschale
- 12: Auslass
- 13: Aufnahme
- 14: Ventil
- 15: Betätigungsgeometrie
- 16: erstes Teil
- 17: zweites Teil
- 18: Rand
- 19: Öffnung
- 19': Öffnung
- 20: Dichtelement
- 21: Kammer
- 22: Aufprallfläche
- 23: Griffabschnitt
- 25: Gehäuseöffnung

## Patentansprüche

1. Maschine (1) zur Zubereitung eines Heißgetränkes, mit
- einer Einrichtung zur Erzeugung und zum Fördern von heißem Wasser;
- einer Haltevorrichtung (4), in die ein Filterhalter (10) lösbar einsetzbar ist;
- einem Zulauf (7) für das heiße Wasser, der einen oberhalb des Filterhalters (10) angeordneten Auslass (9) aufweist, um das heiße Wasser von oben auf den Filterhalter (10) in eine nach oben offene Aufnahme (13) mit einem Extraktionsmaterial auszugeben, und
- einer Antriebseinrichtung, um den Zulauf (7) für das heiße Wasser relativ zu dem Filterhalter (10) zu bewegen,
**dadurch gekennzeichnet, dass** der Filterhalter (10) eine Kammer (21) für Wasser aufweist, die über eine Öffnung (19, 19') befüllbar ist und der Zulauf (7) relativ zu dem Filterhalter (10) zwischen einer Position im Wesentlichen vertikal über der Öffnung (19) und einer weiteren Position im Wesentlichen vertikal über der Aufnahme (13) mit dem Extraktionsmaterial bewegbar ist.

2. Maschine nach Anspruch 1, **dadurch gekennzeichnet, dass** die Kammer (21) zum Sammeln von Wasser in dem Filterhalter (10) ein Volumen zwischen 10 ml bis 400 ml, insbesondere 20 ml bis 80 ml, aufweist.

3. Maschine nach Anspruch 1 oder 2, **dadurch gekennzeichnet, dass** der Filterhalter (10) mehrteilig ausgebildet ist und ein erstes Teil (16) eine Aufnahme für das Extraktionsmaterial ausbildet und das erste Teil (16) von einem zweiten Teil (17) zumindest bereichsweise umgeben ist, und zwischen dem ersten Teil (16) und dem zweiten Teil (17) die Kammer (21) zum Sammeln von Wasser ausgebildet ist.

4. Maschine nach Anspruch 3, **dadurch gekennzeichnet, dass** die Kammer (21) ringförmig ausgebildet ist und zwischen dem ersten Teil (16) und dem zweiten Teil (17) ein Dichtelement (20) angeordnet ist.

5. Maschine nach Anspruch 3 oder 4, **dadurch gekennzeichnet, dass** das zweite Teil (17) an dem ersten Teil (16) über Befestigungsmittel fixiert ist.

6. Maschine nach einem der vorhergehenden Ansprüche, **dadurch gekennzeichnet, dass** an der Öffnung (19, 19') eine zur Horizontalen geneigte Aufprallfläche (22) vorgesehen ist, von der das aufgegebene heiße Wasser in die Kammer (21) abläuft.

7. Maschine nach einem der vorhergehenden Ansprüche, **dadurch gekennzeichnet, dass** an dem Filterhalter (10) die Aufnahme (13) zwischen einer ersten Öffnung (19) und einer zweiten Öffnung (19') angeordnet ist, die mit der Kammer (21) zum Sammeln von Wasser verbunden sind.

8. Maschine nach einem der vorhergehenden Ansprüche, **dadurch gekennzeichnet, dass** an der Aufnahme (13) an der Unterseite ein Ventil (14) zum Öffnen oder Schließen einer Auslassöffnung vorgesehen ist.

9. Maschine nach einem der vorhergehenden Ansprüche, **dadurch gekennzeichnet, dass** an dem Zulauf (7) oder der Haltevorrichtung (4) ein Sensor vorgesehen ist, mittels dem erfassbar ist, ob der Filterhalter (10) an der Haltevorrichtung (4) angeordnet ist.

10. Maschine nach einem der vorhergehenden Ansprüche, **dadurch gekennzeichnet, dass** an dem Zulauf (7) ein nach unten abstrahlendes Leuchtmittel vorgesehen ist.

11. Verfahren zur Zubereitung eines Heißgetränkes, mit den folgenden Schritten:
- Erwärmen von Wasser und Fördern des erhitzten Wassers zu einem Zulauf (7);
- Ausgabe einer ersten Menge an Wasser an dem Zulauf (7) in eine Öffnung (19, 19') an einem Filterhalter (10), von der die erste Menge an Wasser in eine Kammer (21) zum Sammeln des Wassers geleitet wird;
- Verfahren des Zulaufes (7) relativ zu dem Filterhalter (10), damit der Zulauf (7) von einer Position oberhalb der Öffnung (19, 19') zu einer Position oberhalb einer nach oben offenen Aufnahme (13) mit einem Extraktionsmaterial bewegt wird, und
- Ausgeben einer zweiten Menge an heißem Wasser auf das Extraktionsmaterial in dem Filterhalter (10) zum Brühen des Heißgetränkes.

12. Verfahren nach Anspruch 11, **dadurch gekennzeichnet, dass** die erste Menge an heißem Wasser zwischen 1 ml bis 80 ml, insbesondere zwischen 5 ml bis 30 ml, beträgt.

13. Verfahren nach Anspruch 11 oder 12, **dadurch gekennzeichnet, dass** der Filterhalter (10) stillstehend angeordnet ist und der Zulauf (7) über eine Antriebseinrichtung bewegt wird.

## Claims

1. Machine (1) for the preparation of a hot beverage, comprising
- a device for the production and delivery of hot water;
- a holding device (4) into which a filter holder (10) can be detachably inserted;
- a feed (7) for the hot water having an outlet (9) arranged above the filter holder (10) for discharging the hot water from above the filter holder (10) into an upwardly open receptacle (13) containing an extraction material, and
- a drive device to move the feed (7) for the hot water relative to the filter holder (10),
**characterized in that** the filter holder (10) comprises a chamber (21) for water which is fillable via an opening (19, 19') and the feed (7) is movable relative to the filter holder (10) between a position substantially vertically above the opening (19) and a further position substantially vertically above the receptacle (13) with the extraction material.

2. Machine according to claim 1, **characterized in that** the chamber (21) for collecting water in the filter holder (10) has a volume between 10 ml to 400 ml, in particular 20 ml to 80 ml.

3. Machine according to claim 1 or 2, **characterized in that** the filter holder (10) is formed in several parts and a first part (16) forms a receptacle for the extraction material and the first part (16) is surrounded by a second part (17) at least in regions, and the chamber (21) for collecting water is formed between the first part (16) and the second part (17).

4. Machine according to claim 3, **characterized in that** the chamber (21) is of annular design and a sealing element (20) is arranged between the first part (16) and the second part (17).

5. Machine according to claim 3 or 4, **characterized in that** the second part (17) is fixed to the first part (16) by fastening means.

6. Machine according to one of the preceding claims, **characterized in that** an impact surface (22) inclined to the horizontal is provided at the opening (19, 19'), from which the applied hot water drains into the chamber (21).

7. Machine according to one of the preceding claims, **characterized in that** on the filter holder (10) the receptacle (13) is arranged between a first opening (19) and a second opening (19') connected to the chamber (21) for collecting water.

8. Machine according to one of the preceding claims, **characterized in that** a valve (14) for opening or closing an outlet opening is provided on the receptacle (13) on the underside.

9. Machine according to one of the preceding claims, **characterized in that** a sensor is provided on the feed (7) or the holding device (4), by means of which it can be detected whether the filter holder (10) is arranged on the holding device (4).

10. Machine according to one of the preceding claims, **characterized in that** a downwardly radiating light source is provided at the feed (7).

11. Method for preparing a hot beverage, comprising the steps of:
- heating water and conveying the heated water to a feed (7);
- dispensing a first amount of water at the feed (7) into an opening (19, 19') on a filter holder (10) from which the first amount of water is directed into a chamber (21) for collecting the water;
- moving the feed (7) relative to the filter holder (10) to move the feed (7) from a position above the opening (19, 19') to a position above an upwardly open receptacle (13) containing an extraction material, and
- dispensing a second amount of hot water onto the extraction material in the filter holder (10) to brew the hot beverage.

12. Method according to claim 11, **characterized in that** the first amount of hot water is between 1 ml to 80 ml, in particular between 5 ml to 30 ml.

13. Method according to claim 11 or 12, **characterized in that** the filter holder (10) is arranged stationary and the feed (7) is moved via a drive device.

## Revendications

1. Machine (1) pour préparer une boisson chaude comprenant :
- une installation pour générer et fournir de l'eau chaude,
- un dispositif de support (4) recevant de manière amovible un porte-filtre (10) ;
- une arrivée (7) d'eau chaude avec une sortie (9) au-dessus du porte-filtre (10) pour distribuer l'eau chaude au-dessus du porte-filtre (10) dans un réceptacle (13) dont le dessus est ouvert et contenant un produit d'extraction, et
- une installation d'entrainement pour déplacer l'arrivée (7) d'eau chaude par rapport au porte-filtre (10),
machine **caractérisée en ce que**
le porte-filtre (10) a une chambre (21) pour l'eau qui se remplit par une ouverture (19, 19') et l'arrivée (7) est mobile par rapport au porte-filtre (10) entre une position pratiquement à la verticale au-dessus de l'ouverture (19) et une autre position pratiquement à la verticale au-dessus du réceptacle (13) garni du produit d'extraction.

2. Machine selon la revendication 1, **caractérisée en ce que** la chambre (21) a une capacité comprise entre 10 ml et 400 ml notamment entre 20 ml et 80 ml pour recevoir l'eau dans le porte-filtre (10).

3. Machine selon la revendication 1 ou 2, **caractérisée en ce que** le porte-filtre (10) est en plusieurs parties dont une première partie (16) forme un réceptacle pour le produit d'extraction et cette première partie (16) est entourée au moins par zone par une seconde partie (17), la chambre (21) pour collecter l'eau, étant comprise entre la première partie (16) et la seconde partie (17).

4. Machine selon la revendication 3, **caractérisée en ce que** la chambre (21) a une forme annulaire et un joint d'étanchéité (20) entre la première partie (16) et la seconde partie (17).

5. Machine selon la revendication 3 ou 4, **caractérisée en ce que** la seconde partie (17) est fixée à la première partie (16) par un moyen de fixation.

6. Machine selon l'une des revendications précédentes, **caractérisée en ce que** l'orifice (19, 19') a une surface brise-jet (22) inclinée par rapport à la direction horizontale et à partir de laquelle l'eau chaude fournie, coule dans la chambre (21).

7. Machine selon l'une des revendications précédentes, **caractérisée en ce que** le porte-filtre (10) a un réceptacle (13) entre une première ouverture (19) et une seconde ouverture (19') reliées à la chambre (21) pour collecter l'eau.

8. Machine selon l'une des revendications précédentes, **caractérisée en ce que** le côté inférieur du réceptacle (13) a un clapet (14) pour fermer un orifice de sortie.

9. Machine selon l'une des revendications précédentes, **caractérisée en ce que** l'arrivée (7) ou le dispositif de support (4) comporte un capteur détectant que le porte-filtre (10) se trouve sur le dispositif de support (4).

10. Machine selon l'une des revendications précédentes, **caractérisée en ce que** l'arrivée (7) comporte un moyen d'éclairage dirigé vers le bas.

11. Procédé de préparation d'une boisson chaude comprenant les étapes suivantes consistant à :
- chauffer et transférer l'eau vers une arrivée (7),
- distribuer une première quantité d'eau à l'arrivée (7) dans une ouverture (19, 19') d'un porte-filtre (10) d'où la première quantité d'eau passe dans une chambre (21) de collecte l'eau,
- déplacer l'arrivée (7) par rapport au porte-filtre (10) pour que l'arrivée (7) passe d'une position au-dessus de l'ouverture (19, 19') dans une position au-dessus d'un réceptacle (13) ouvert vers le haut et contenant le produit d'extraction, et
- distribuer une première quantité d'eau chaude sur le produit d'extraction dans le porte-filtre (10) pour faire infuser la boisson chaude.

12. Procédé selon la revendication 11, **caractérisé en ce que** la première quantité d'eau est comprise entre 1 ml et 80 ml, notamment entre 5 ml et 30 ml.

13. Procédé selon la revendication 11 ou 12, **caractérisé en ce que** le porte-filtre (10) est installé de façon fixe et l'arrivée (7) est mobile par une installation d'entraînement.
